# EUROPÄISCHE PATENTANMELDUNG

(11) **EP 1 653 588 A2**
(43) Veröffentlichungstag der Anmeldung: **03.05.2006**
(21) Anmeldenummer: 05109995.0
(22) Anmeldetag: 26.10.2005
(51) Int. Cl.: H02K 3/34, H02K 3/40

(54) **Vorrichtung zur Verbesserung des Schutzes eines Bauteils vor Oberflächen-Entladungen**

(30) Priorität: 01.11.2004 CH 18032004
(71) Anmelder: Alstom Technology Ltd, 5400 Baden (CH)
(72) Erfinder: Baumann, Thomas, 5430, Wettingen (CH)

(57) **Zusammenfassung**

Die Erfindung betrifft eine Vorrichtung (5) zur Verbesserung des Schutzes eines Bauteils vor elektrischen Oberflächen-Entladungen, insbesondere eine Bügelglimmschutzvorrichtung (5), mit einem nicht gewebten Trägermaterial (6), welches aus Fasern (9) hergestellt ist, wobei das Trägermaterial (6) elektrisch isolierend ausgebildet ist und eine siliciumcarbidhaltige (SiC) Beschichtung (7) aufweist.

## Beschreibung

### Technisches Gebiet

Die vorliegende Erfindung betrifft eine Vorrichtung zur Verbesserung des Schutzes eines Bauteils vor Oberflächen-Entladungen, insbesondere eine Bügelglimmschutzvorrichtung.

### Stand der Technik

Rotierende elektrische Maschinen, wie beispielsweise Generatoren, weisen üblicherweise einen sich drehenden Rotor und einen lagefixierten Stator auf, wobei sowohl der Rotor als auch der Stator jeweils eine Vielzahl von aus elektrisch leitendem Material gebildeten Wicklungen aufweisen. Sowohl die statorseitigen als auch die rotorseitigen Wicklungen sind dabei von elektrischem Strom durchflossen. Zum störungsfreien Betrieb des Generators bzw. des Elektromotors müssen die Wicklungen des Stators bzw. des Rotors elektrisch isoliert sein. Die Isolierung als solche bietet jedoch keinen ausreichenden Schutz vor Oberflächen-Entladungen, also vor Beschädigungen, insbesondere Zerstörung, durch elektrische Entladungen auf der Oberfläche der Isolation. Um die Bauteile an den relevanten Stellen vor derartigen elektrischen Entladungen - auch Glimmentladungen genannt - zu schützen, sind Glimmschutzvorrichtungen bekannt. Ein derartiger Glimmschutz wird an der Oberfläche der zu schützenden Isolierung angeordnet und besitzt eine schwache elektrische Leitfähigkeit, was z.B. durch eine Zugabe von Graphit und/oder Ruß erreicht werden kann. Üblicherweise weisen derartige Glimmschutzvorrichtungen ein gewebtes Trägermaterial sowie eine darauf aufgebrachte Glimmschutzbeschichtung auf.

### Darstellung der Erfindung

Hier setzt die vorliegende Erfindung an. Die Erfindung, wie sie in den Ansprüchen gekennzeichnet ist, beschäftigt sich mit dem Problem, für eine Vorrichtung der eingangs erwähnten Art eine verbesserte Ausführungsform anzugeben, mit der sich insbesondere ein effektiver Glimmschutz kostengünstig und bezüglich seiner Abmessung leicht anpassbar realisieren lässt.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, eine Vorrichtung zur Verbesserung des Schutzes eines Bauteils vor elektrischen Oberflächen-Entladungen, insbesondere eine Bügelglimmschutzvorrichtung, aus einem nicht gewebten, elektrisch isolierenden und fasrigen Trägermaterial herzustellen, auf welches eine siliciumcarbidhaltige (SiC) Beschichtung aufgebracht ist. Das nicht gewebte und aus Fasern hergestellte Trägermaterial (nonwoven-material) bietet den großen Vorteil, dass es bezüglich gewebter Trägermaterialien deutlich kostengünstiger herzustellen ist und sich zudem einfach schneiden und drapieren lässt, ohne dass es an den Rändern ausfranst. Darüber hinaus ist auch die leichte Anpassbarkeit hinsichtlich der Breite der erforderlichen Glimmerbänder gegeben, da diese leicht mittels einer Schneidemaschine in die gewünschte Breite geschnitten werden können, gleichzeitig aber stets einen scharfen und unausgefransten Rand aufweisen, welcher einen zuverlässigen und qualitativ hochwertigen Glimmschutz des Bauteils zulässt.

Gemäß einer ersten Ausführungsform der erfindungsgemäßen Lösung ist die siliciumcarbithaltige Beschichtung ein aushärtbarer oder bereits ausgehärteter Lack mit darin enthaltenen Siliciumcarbid-Körnern. Eine derartige Ausbildung der Beschichtung bietet den Vorteil, dass das Trägermaterial beispielsweise in einem Tauchlackierverfahren einfach beschichtet werden kann und damit schnell und kostengünstig herstellbar ist. Durch die Lackierbarkeit der Beschichtung kann darüber hinaus eine besonders hohe und gleichbleibende Qualität der Beschichtung gewährleistet werden, wodurch sich ein besonders effektiver Schutz des Bauteils vor elektrischen Oberflächen-Entladungen ergibt.

Zweckmäßig werden die Fasern des Trägermaterials von einem Binder zusammengehalten. Dabei kann die Bindung der Fasern beispielsweise als thermische und/oder chemische Bindung erfolgen. Dies ermöglicht einen auf den jeweiligen Anwendungsfall ausgerichteten Einsatz des Binders und dadurch eine besonders hohe Flexibilität hinsichtlich der verwendeten Binder bzw. Werkstoffe.

Gemäß einer weiteren Ausführungsform ist die Vorrichtung ein Bügelglimmschutzband. Ein derartiger Bügelglimmschutz schützt diejenigen Teile der Leiterstäbe, die sich zwar noch innerhalb des Stators, jedoch bereits außerhalb der zur Aufnahme der Leiterstäbe dienenden Statornuten befinden. Außerhalb des Stators sind die einzelnen Leiterstäbe im sogenannten Statorwickelkopf miteinander verbunden, um eine geschlossene Wicklung zu bilden.

Bei einer weiteren Ausführungsform der Erfindung besteht das Trägermaterial aus Polyesterfasern. Polyesterfasern sind in nahezu jeglicher Größe und Abmessung kostengünstig herstellbar und leicht mittels chemischem Binder zum nicht gewobenen, tuchartigen Trägermaterial zu verbinden. Denkbar ist hierbei aber auch eine thermische Verbindung, bei welcher der Polyester zum Verbinden erhitzt wird. Da Polyesterfasern preiswert herstellbar sind, lässt sich somit auch eine kostengünstige Herstellung der Glimmschutzvorrichtung realisieren.

Weitere Merkmale und Vorteile der erfindungsgemäßen Vorrichtung ergeben sich aus den Unteransprüchen, aus den Zeichnungen und aus der zugehörigen Figurenbeschreibung anhand der Zeichnungen.

### Kurze Beschreibung der Zeichnungen

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen. Es zeigen, jeweils schematisch,
- Fig. 1: einen elektrischen Leiter im Bereich einer Nut eines Stators mit einer erfindungsgemäßen Vorrichtung zur Verbesserung des Schutzes vor Oberflächen-Entladungen,
- Fig. 2: einen Querschnitt durch den elektrischen Leiter mit einer erfindungsgemäßen Bügelglimmschutzvorrichtung,
- Fig. 3: eine teilweise geschnittene Ansicht auf die beschichtete Seite der erfindungsgemäßen Bügelglimmschutzvorrichtung.

### Wege zur Ausführung der Erfindung

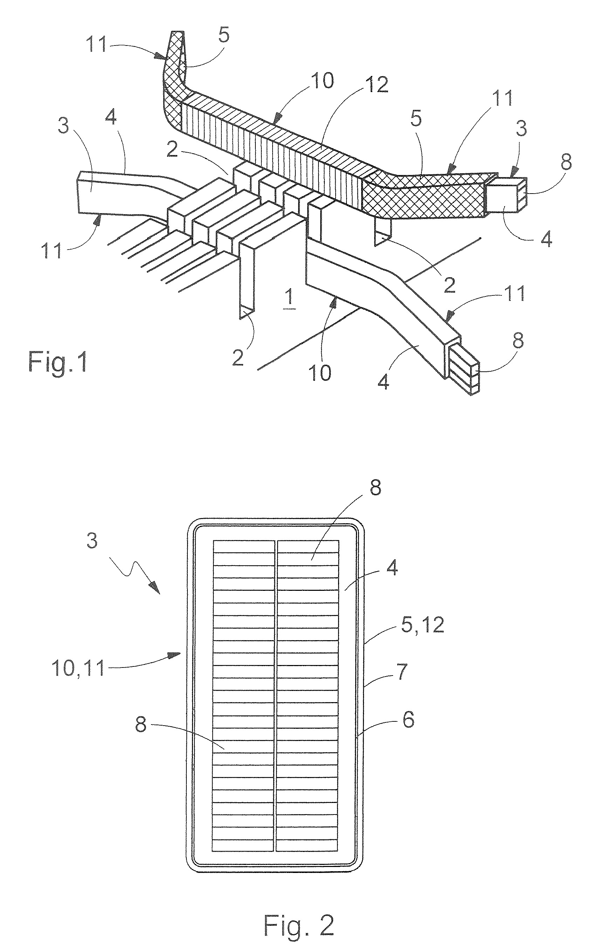

Entsprechend Fig. 1 weist ein Stator 1 mehrere Nuten 2 auf, durch welche jeweils zumindest ein elektrischer Leiter 3 verläuft. Der elektrische Leiter 3 oder Leiterstab 3 weist einen in der jeweiligen Nut 2 liegenden Nutabschnitt 10 sowie beidseitig außerhalb der Nut 2 liegende Bügelabschnitte 11 auf. Der Stator 1 kann beispielsweise aus Eisen und damit elektrisch leitend und magnetisch ausgebildet und Teil eines nicht gezeigten Generators und/oder Elektromotors sein. Um einen Übergang des im elektrischen Leiter 3 fließenden Stroms auf den Stator 1 zu vermeiden, ist der Leiter 3 mit einer Isolierung 4 versehen, welche einen hohen elektrischen Widerstand aufweist. Die Isolierung 4 kann durch elektrische Oberflächen-Entladungen geschädigt werden, welche dann auftreten, wenn sich auf der Isolatoroberfläche ein genügend großes elektrische Potential gegenüber dem Eisen des Stators 1 bzw. gegenüber einem Gasraum im Bereich der Bügelabschnitte 11 aufbaut.

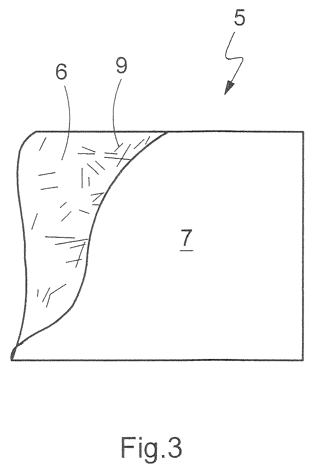

Zur Verbesserung des Schutzes des Stators 1 bzw. der Isolierung 4 vor elektrischen Glimmentladungen auf der Oberfläche ist der elektrische Leiter 3 in den Bügelabschnitten 11 jeweils von einer erfindungsgemäßen Bügelglimmschutzvorrichtung 5 umgeben. Desweiteren ist der jeweilige Leiter 3 in seinem Nutabschnitt 10 von einer Nutglimmschutzvorrichtung 12 umgeben. Die Bügelglimmschutzvorrichtung 5 oder kurz Vorrichtung 5 oder Bügelglimmschutz 5 weist erfindungsgemäß ein nicht gewobenes Trägermaterial 6 auf, welches aus Fasern 9 hergestellt, elektrisch isolierend ausgebildet ist und eine darauf aufgebrachte siliciumcarbidhaltige (SiC) Beschichtung 7 besitzt (vgl. Fig. 3), welche eine zur Realisierung des Glimmschutzes erforderliche geringe elektrische Leitfähigkeit erzeugt. Die siliciumcarbidhaltige Beschichtung 7 kann beispielsweise ein aushärtbarer bzw. ausgehärteter Lack sein, welcher Siliciumcarbid-Körner enthält. Dies bietet die Möglichkeit, die Beschichtung 7 in einem Lackierverfahren, insbesondere im Tauchlackierverfahren, auf das Trägermaterial 6 aufzubringen. Das Tauchlackieren bietet den großen Vorteil, dass eine kontinuierliche und gleichmäßige Beschichtung des Trägermaterials 6 erfolgen und zugleich die Beschichtung 7 schnell und kostengünstig aufgebracht werden kann. Nach dem Lackieren härtet die siliciumcarbidhaltige Beschichtung 7 aus und schafft so den erfindungsgemäßen Bügelglimmschutz 5.

Im Unterschied dazu ist die Nutglimmschutzvorrichtung 12 bzw. der Nutglimmschutz 12 nicht mit SiC, sonder mit einer Graphit und/oder Ruß enthaltenden Beschichtung realisiert.

Sowohl die Nutglimmschutzvorrichtung 12 als auch die Bügelglimmschutzvorrichtung 5 bilden dabei Außenglimmschutzvorrichtungen und sind vorzugsweise jeweils als Glimmschutzbänder ausgebildet, welche um den elektrischen Leiter 3 gewickelt werden. Im Vergleich zum Nutglimmschutz 12, welcher beispielsweise einen Graphitfüller und einen Widerstand von ca. 10³ Ohm aufweist, besitzt der Bügelglimmschutz 5 die erwähnte siliciumcarbidhaltige Beschichtung 7 und weist einen Widerstand von ca. 10⁸ Ohm auf.

Gemäß Fig. 2 weist der elektrische Leiter 3 mehrere Teilleiter 8 auf, welche paketartig zusammengefasst und von der Isolierung 4 umschlossen sind. Um eine äußere Oberfläche der Isolierung 4 sind dabei die Außenglimmschutzvorrichtungen 5, 12 angebracht, vorzugsweise gewickelt. Diese Außenglimmschutzvorrichtungen 5, 12 sind am Nutabschnitt 10 als Nutglimmschutz 12 und an den Bügelabschnitten 11 als Bügelglimmschutz 5 nach der Erfindung ausgestaltet.

Wie in Fig. 3 gezeigt ist, sind die Fasern 9 im nicht gewobenen Trägermaterial 6 ungerichtet, wodurch im wesentlichen isotrope Eigenschaften, insbesondere im Hinblick auf eine Zugfestigkeit, gewährleistet werden können. Denkbar ist hierbei jedoch auch, dass die Fasern 9 eine Vorzugsrichtung aufweisen und dadurch das Trägermaterial 6 anisotrope Eigenschaften aufweist. Beispielsweise können die Fasern 9 in einer Maschinenrichtung orientiert sein. Als Fasern 9 kommen insbesondere Polyesterfasern in Frage, welche einerseits kostengünstig herzustellen sind und andererseits einfach bearbeitet werden können. Generell kommen alle elektrisch isolierenden Glas-, Mineral- oder Kunststofffasern in Betracht. Je nach eingesetzten Fasern 9 lassen sich unterschiedliche Flächengewichte von ca. 20 g/m² oder 30 g/m² bis zu mehreren 100 g/m² realisieren.

Um eine gewisse Zugbelastung in der Ebene des Trägermaterials 6 zu gewährleisten, werden die Fasern 9 von einem Binder zusammengehalten. Ein derartiger Binder kann beispielsweise ein Reaktionsharz sein und/oder ein anderer chemisch aktivierbarer Kleber. Bei thermoplastischen Fasern 9, können diese auch durch Erhitzen in einem thermischen Verbindungsprozess miteinander verbunden werden.

Durch den Einsatz des erfindungsgemäßen nicht gewobenen Trägermaterials 6 mit der darauf angeordneten Beschichtung 7 kann die Bügelglimmschutzvorrichtung 5 nicht nur kostengünstig hergestellt werden, sie bietet auch die Möglichkeit, einfach und exakt in unterschiedlich breite Streifen geschnitten zu werden und damit Bügelglimmschutzbänder zum Umwickeln von elektrischen Leitern 3 zu schaffen. Im Unterschied zu Bügelglimmschutzbändern mit einem gewobenen Trägermaterial, welches beim Schneiden randseitig ausfransen kann, verbleibt bei der erfindungsgemäßen Bügelglimmschutzvorrichtung 5 auch nach dem Schneiden ein exakter und scharfer Rand, der keinerlei Ausfransungsneigungen zeigt.

Durch die problemlose Schneidbarkeit des nicht gewebten Trägermaterials 6 kann das Bügelglimmschutzband zunächst als Breitband hergestellt werden, das anschließend bedarfsgerecht und kostensparend zugeschnitten werden kann. Eine vorherige Festlegung einer Breite des Bügelglimmschutzbandes ist daher nicht erforderlich.

### Bezugszeichenliste

- 1: Stator
- 2: Nut
- 3: elektrischer Leiter
- 4: Isolierung
- 5: Bügelglimmschutzvorrichtung
- 6: Trägermaterial
- 7: Beschichtung
- 8: Teilleiter
- 9: Fasern
- 10: Nutabschnitt von 3
- 11: Bügelabschnitt von 3
- 12: Nutglimmschutzvorrichtung

## Patentansprüche

1. Vorrichtung (5) zur Verbesserung des Schutzes eines Bauteils vor Oberflächen-Entladungen, insbesondere eine Bügelglimmschutzvorrichtung (5),
- mit einem nicht gewebten Trägermaterial (6), welches aus Fasern (9) hergestellt ist,
- wobei das Trägermaterial (6) elektrisch isolierend ausgebildet ist und eine siliciumcarbidhaltige (SiC) Beschichtung (7) aufweist.

2. Vorrichtung nach Anspruch 1, **dadurch gekennzeichnet, dass** die siliciumcarbidhaltige Beschichtung (7) ein aushärtbarer oder ausgehärteter Lack mit darin enthaltenen SiC-Kristallen oder SiC-Körnern ist.

3. Vorrichtung nach Anspruch 2, **dadurch gekennzeichnet, dass** der Lack bereits im nicht montierten Zustand der Vorrichtung (5) ausgehärtet ist, insbesondere unmittelbar nach dem Tränken des Trägermaterials (6) mit dem Lack.

4. Vorrichtung nach Anspruch 2, **dadurch gekennzeichnet, dass** der Lack im nicht montierten, jedoch montagebereiten Zustand noch nicht ausgehärtet ist, insbesondere erst im montierten Zustand ausgehärtet ist.

5. Vorrichtung nach einem der Ansprüche 1 bis 4, **dadurch gekennzeichnet, dass** das Trägermaterial (6) vliesartig ausgebildet ist.

6. Vorrichtung nach einem der Ansprüche 1 bis 5, **dadurch gekennzeichnet, dass** das Trägermaterial (6) ein Gewicht von kleiner als 100 g/m² aufweist.

7. Vorrichtung nach einem der Ansprüche 1 bis 6, **dadurch gekennzeichnet, dass** das Trägermaterial (6) Polyesterfasern aufweist.

8. Vorrichtung nach einem der Ansprüche 1 bis 7, **dadurch gekennzeichnet, dass** die Fasern (9) des Trägermaterials (6) von einem Binder zusammengehalten werden.

9. Vorrichtung nach einem der Ansprüche 1 bis 8, **dadurch gekennzeichnet, dass** die Vorrichtung (5) ein Bügelglimmschutzband ist.

10. Vorrichtung nach einem der Ansprüche 1 bis 9, **dadurch gekennzeichnet, dass** die Fasern (9) des nicht gewebten Trägermaterials (6) eine Vorzugsorientierung aufweisen.

11. Vorrichtung nach Anspruch 10, **dadurch gekennzeichnet, dass** die Vorzugsorientierung der Fasern (9) auf eine Maschinenrichtung ausgerichtet ist.

12. Verwendung eines nichtgewebten Materials als Trägermaterial (6) für eine siliciumcarbidhaltige Beschichtung (7) in einer Bügelglimmschutzvorrichtung (5), insbesondere nach einem der Ansprüche 1 bis 11.

13. Elektrische Maschine, insbesondere ein Elektromotor oder ein Generator, mit einer stator- und/oder rotorseitigen Bügelglimmschutzvorrichtung (5) nach zumindest einem der Ansprüche 1 bis 11.

14. Verfahren zum Anbringen einer Bügelglimmschutzvorrichtung (5) nach zumindest einem der Ansprüche 1 bis 11 auf einen Bügelabschnitt (11) eines Leiters (3) eines Stators (1) einer elektrischen Maschine,
- bei dem die als Bügelglimmschutzband ausgestaltete Bügelglimmschutzvorrichtung (5) auf den Bügelabschnitt (11) aufgewickelt wird,
- bei dem ein SiC-Körner enthaltender Lack, der die siliciumcarbidhaltige Beschichtung (7) des Trägermaterials (6) bildet, vor dem Aufwickeln, insbesondere unmittelbar nach dem Tränken des Trägermaterials (6) mit dem Lack, oder nach dem Aufwickeln ausgehärtet wird.
